# EUROPEAN PATENT SPECIFICATION

(11) **EP 2 339 657 B1**
(45) Date of publication and mention of the grant of the patent: **11.07.2012**
(21) Application number: 10015702.3
(22) Date of filing: 16.12.2010
(51) Int. Cl.: H02N 2/00, H02N 2/04

(54) **Self-guided piezoelectric motor with radial load capability**
Selbstführender piezoelektrischer Motor mit Radiallastfähigkeit
Moteur piézoélectrique autoguidé avec capacité de charge radiale

(30) Priority: 24.12.2009 IT TO20091037
(43) Date of publication of application: 29.06.2011
(73) Proprietor: CE.S.I. Centro Studi Industriali di Taddei Ing. Franco & C. S.a.s., 20093 Cologno Monzese (MI) (IT)
(72) Inventor: Taddei, Franco, 20093 Cologno Monzese (MI) (IT); Merlo, Angelo, 20093 Cologno Monzese (MI) (IT); Ricciardi, Donato, 20093 Cologno Monzese (MI) (IT)
(74) Representative: Garavelli, Paolo

(56) References cited:
- EP-A1- 1 788 645
- DE-A1- 2 542 024
- DE-A1-102006 032 743
- US-A- 5 359 252

## Description

The present invention refers to a self-guided piezoelectric motor with radial load capability.

The work leading to this invention has received funding from the European Union Seventh Framework Programme (FP7/2007-2013) under Grant Agreement No. NMP2-SL-2010-260051.

It is known in the art that a piezoelectric actuator is a device composed of a plurality of ceramic disks stacked to form a cylinder, between such ceramic disks being interposed disks whose thickness is a few micrometers that are the electrodes: such actuators are generally used in industrial applications such as micro-positioning, active vibration check, etc.

The particular structure of the piezoelectric actuator however makes this latter one subjected to numerous inconveniences: in fact, it is able to resist only to compression loads, while in practice it has no way of supporting traction and shearing loads, bending or twisting moments. In order to guarantee an axial pre-load that allows the piezoelectric actuator to also work under traction, the art proposes motors composed of a piezoelectric actuator lined into a container where there is a device for pre-loading, typically springs.

The characteristics of current piezoelectric motors/actuators are providing a stroke on the order of hundredths of millimeter and a thrust of some tons along its longitudinal axis. Taking into account what has been previously stated about their mechanical resistance characteristics, for the correct operation of current piezoelectric motors/actuators, in order to avoid their destruction, mechanical systems must compulsorily be joined to them, suitable to support all force components acting thereon, that are not simply the compression force. This implies a highly complex structure/system in which it has to operate.

US-A-5 359 252 discloses a piezoelectric motor according to the preamble of Claim 1.

Therefore, object of the present invention is solving the above prior art problems, by providing a self-guided piezoelectric motor with radial load capability equipped with all mechanical systems necessary for its operation.

A further object of the present invention is providing a self-guided piezoelectric motor that allows a static micropositioning and/or operating under frequency in terms of imposed displacements / speeds / accelerations, being able to operate on the system on which it is implemented with high axial forces, also supporting shearing actions / forces such as, for example, radial actions.

Another object of the present invention is providing a compact self-guided piezoelectric motor with radial load capability that does not require further mechanical arrangements in order to operate, consequently resulting self-sufficient and capable of being directly used as linear motor.

A further object of the present invention is providing a self-guided piezoelectric motor equipped with high static stiffness intrinsic in all directions.

Another object of the present invention is providing a self-guided piezoelectric motor capable of supporting not only axial loads but also shearing loads, bending and twisting moments.

The above and other objects and advantages of the invention, as will appear from the following description, are obtained with a self-guided piezoelectric motor with radial load capability as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) could be made to what is described without departing from the scope of the invention as defined in the enclosed claims.

The present invention will be better described by some preferred embodiments thereof, provided as a non-limiting example, with reference to the enclosed drawings, in which:
- Figure 1 shows a side sectional view of a preferred embodiment of the piezoelectric actuator according to the present invention;
- Figure 2 shows a side sectional view of another preferred embodiment of the piezoelectric actuator according to the present invention;
- Figure 3 shows a perspective, partially-sectioned view of the piezoelectric actuator of Figure 2;
- Figure 4 shows a perspective, partially-sectioned view of another preferred embodiment of the piezoelectric actuator according to the present invention; and
- Figure 5 shows a perspective detailed view of the piezoelectric actuator of Figure 4 in an application example thereof.

With reference to the Figures, it is possible to note that the self-guided piezoelectric motor 1 with radial load capability according to the present invention is composed of at least one piezoelectric actuator 3 contained inside at least one container 5, inside which there are provided, as will be described below in more detail, all elements capable of axially pre-loading the actuator 3 itself, of avoiding traction loads for this latter one and of filtering shearing loads and external moments acting thereon.

In general, the piezoelectric actuator 3 is of a substantially known type, being composed of a plurality of ceramic disks stacked to form a cylinder, between such ceramic disks being inteprosed disks whose thickness is equal to a few micrometers, that are the electrodes thereof. Preferably, the container 5 is composed of a side perimeter wall 5a, to which at least one base 5b is mechanically fastened thereto on its bottom, such piezoelectric actuator 3 being interfaced with the external environment, and in particular with the external system to be actuated, by interposing at least one radial supporting element 7 axially moving along a reference axis R-R defining an actuation direction of the piezoelectric actuator 3 and connected to the container 5 to guarantee a high radial, flexural and torsional stiffness, and a low axial stiffness.

According to the invention, as shown in the Figures, the axially-moving radial supporting element 7 is composed of at least one push rod 9 axially moving with respect to such reference axis R-R under the action of the piezoelectric actuator 3 having a first end 9a in contact with at least one first end 3a of the piezoelectric actuator 3 and a second end 9b, possibly equipped with at least one fastening seat 9c with internal threading, aimed to connect the motor 1 according to the present invention to the external system to be actuated, such push rod 9 being radially equipped with axial guiding means with respect to the reference axis R-R mechanically connected to the container 5, and in particular to the side perimeter wall 5a in an opposite position to the base 5b through the most adequate fastening means such as, for example, screws 13 and a respective closing cover 14.

Preferably, the axial guiding means comprise at least one flexural disk 11 coaxial with respect to the reference axis R-R (preferably the push rod 9 is equipped with at least two flexural disks 11, concentric and coaxial with respect to the reference axis R-R) mechanically connected to the container 5, and in particular to the side perimeter wall 5a in an opposite position to the base 5b; the container 5 therefore operates also as support for the flexural disks 11 that, preferably, form a single body with the push rod 9: the axial movement of the push rod 9 with respect to the reference axis R-R under the action of the piezoelectric actuator 3 is then guided by the flexural disks 11 that, having a high radial, flexural and torsional stiffness, and a low axial stiffness, perform a mechanical filtering function, supporting the respective force components, letting only a very small percentage thereof enter the piezoelectric actuator 3, in order to prevent its breaking.

Obviously, the guiding means could also comprise even only one or more flexural blades with circular sector, radially arranged on the push rod 9 with respect to the reference axis R-R as replacement of the complete flexural disk 11, without thereby departing from the scope of the present invention as defined in the claims.

Moreover, the axially-moving radial supporting element 7, and in particular the flexural disks 11, in addition to allow the above filtering of the loads, apart from the axial one, can be used to pre-load the piezoelectric actuator 3 in order to allow this latter one to operate under traction.

The axially-moving radial supporting element 7 is equipped with one or more sensors, preferably of the "strain-gauge" type or the "piezo-film" type, for measuring the micrometric axial displacement of the push rod 9: preferably, the sensors are applied, for example by gluing or other known deposition technique, on the upper and/or lower surface of the flexural disks 11, in such a way as to measure the distortion of the disk 11 itself that is related to the displacement of the push rod 9.

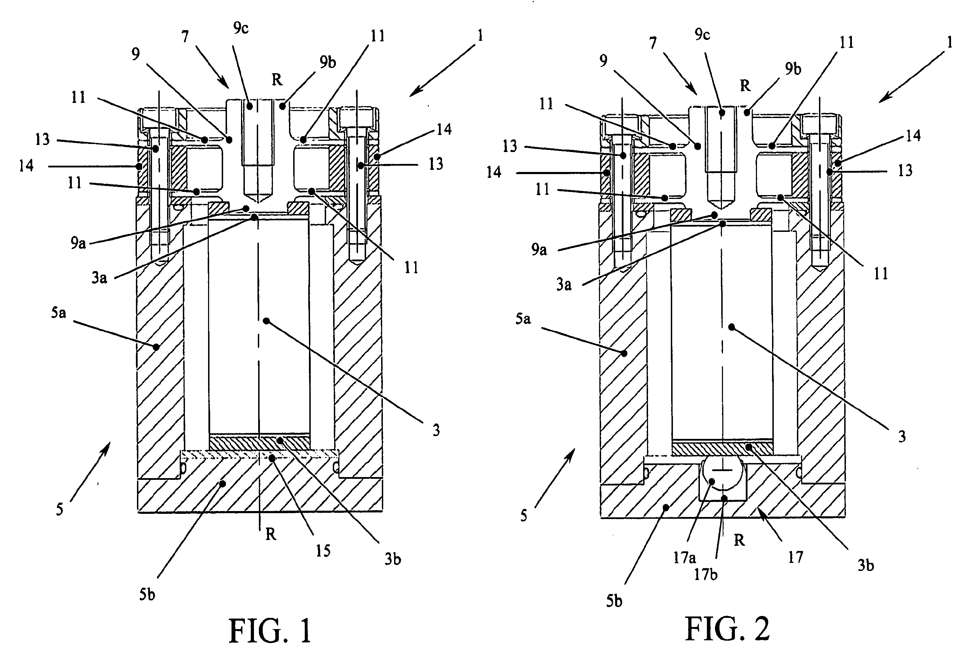

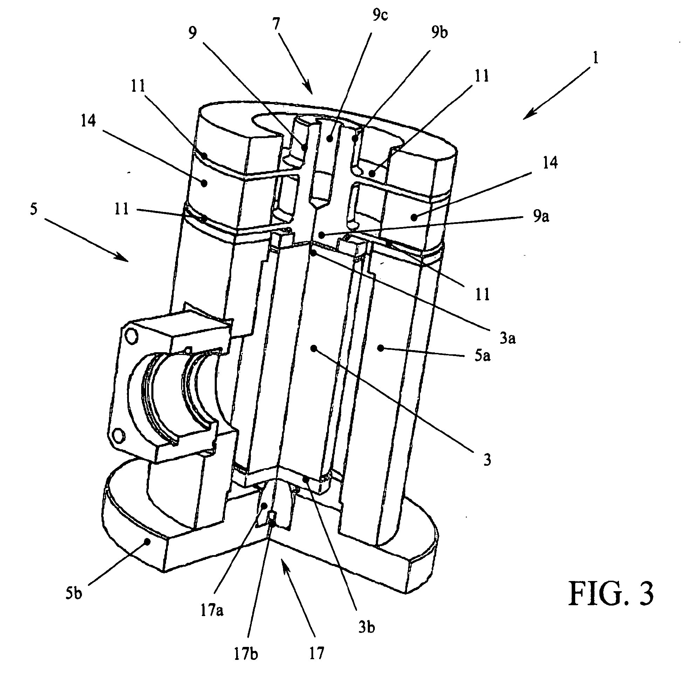

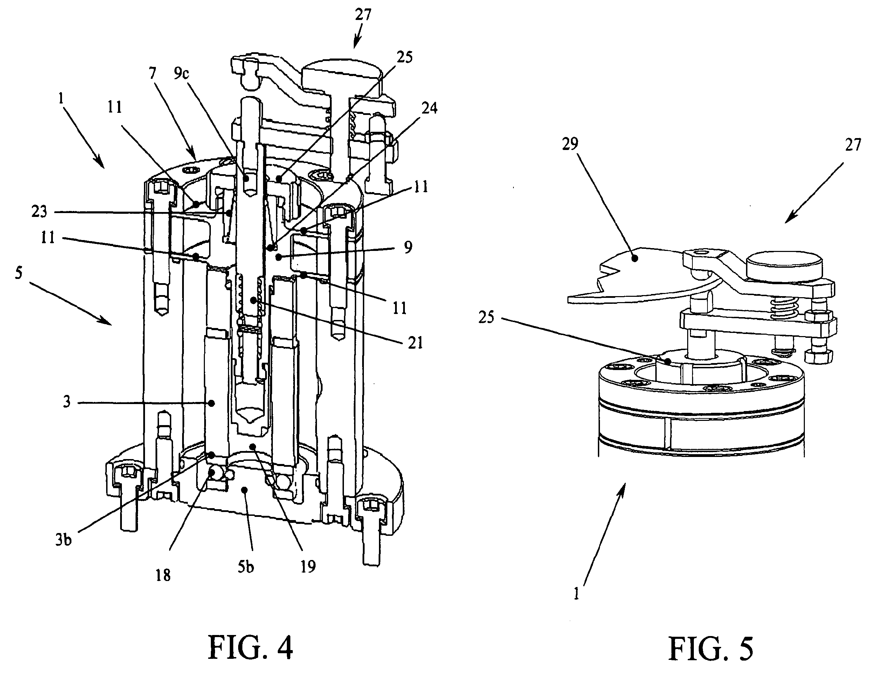

Advantageously, in order to guarantee a further filtering of dangerous force components for a certain degree of bending movement of the piezoelectric actuator 3, mechanical uncoupling means can be interposed between a second end 3a of such piezoelectric actuator 3 and the base 5b of the container 5. In particular, as can be noted in the preferred embodiment of the motor 1 according to the present invention shown in Figure 1, such mechanical uncoupling means can be composed of at least one layer of friction-preventing material 15. Alternatively, with particular reference to the preferred embodiment of the motor 1 according to the present invention shown in Figures 2 and 3, such mechanical uncoupling means can be composed of at least one ball joint 17 composed of at least one oscillation ball 17a connected to the second end 3b of the piezoelectric actuator 3 and oscillating inside a respective seat 17b of the base 5b of the container 5. In a further alternative, with particular reference to the preferred embodiment of the motor 1 according to the present invention shown in Figure 4, such mechanical uncoupling means can be composed of at least one axial bearing 18 suitable for filtering twisting moments and shearing action.

According to a further possible variation of the motor 1 according to the present invention, like the one shown for example in Figure 4, the piezoelectric actuator 3 can be of a type internally equipped with at least one axial recess 19 adapted to allow an adjustment of the axial height of the push rod 9 that is necessary, for example, every time the push rod 9 must have a certain engagement/disengagement stroke that allows it, when it is not actuated by the piezoelectric actuator 3, to be manually taken in contact with a certain piece of the external system to be actuated: such application can for example deal with active blocking/tightening systems for workpieces that must be worked with machine tools.

In particular, the push rod 9 can be equipped with at least one axially-moving stem 21 that can slide, possibly with a screwing/unscrewing movement, inside the axial recess 19 of the piezoelectric actuator 3. Therefore, once having reached the desired axial position, the axially-moving stem 21 can be made integral with the piezoelectric actuator 3 and the rest of the push rod 9, and in particular the flexural disks 11, through suitable fastening means, preferably composed of at least one elastic tightening pliers 23 coaxially arranged onto the stem 21 and interfering with a suitable seat 24 of the push rod 9 that is manually tightened into such seat 24 through at least one tightening ring nut 25, also coaxially arranged onto the stem 21, preferably catching a corresponding threaded seat of the push rod 9.

Advantageously, as shown in particular in Figures 4 and 5, the second end 9b of the push rod 9 can be connected, for example by screwing into the fastening seat 9c, to at least one accessory functional element, such as for example a pliers 27 for blocking/fastening a piece 29 for which an active position chesk is desired.

As just stated above, it is clear that, advantageously, the self-guided piezoelectric motor 1 with radial load capability according to the present invention is a self-sufficient mechanical system, namely capable of resisting to external loads, that can be directly installed on the external system to be actuated without the need of providing particular arrangements for safeguarding the integrity of the piezoelectric actuator 3 contained therein.

## Claims

1. Self-guided piezoelectric motor (1) with radial load capability, composed of at least one piezoelectric actuator (3) contained inside at least one container (5), said piezoelectric actuator (3) being interfaced with an external system to be actuated by interposing at least one radial supporting element (7) axially moving along a reference axis (R-R) defining an actuation direction of said piezoelectric actuator (3), said axially-moving radial supporting element (7) being composed of at least one push rod (9) axially moving with respect to said reference axis (R-R) under the action of said piezoelectric actuator (3), said push rod (9) being radially equipped with axial guiding means with respect to said reference axis (R-R) that are mechanically connected to said container (5), **characterised in that** said axially-moving radial supporting element (7) is equipped with one or more sensors adapted to measure a micrometric axial displacement of said push rod (9).

2. Piezoelectric motor (1) according to claim 1, **characterised in that** said axial guiding means comprise at least one flexural disk (11) coaxial with said reference axis (R-R)

3. Piezoelectric motor (1) according to claim 1, **characterised in that** said push rod (9) has a first end (9a) in contact with at least one first end (3a) of said piezoelectric actuator (3) and a second end (9b) for a connection to said external system to be actuated.

4. Piezoelectric motor (1) according to claim 1, **characterised in that** mechanical uncoupling means are interposed between said second end (3a) of said piezoelectric actuator (3) and a base (5b) of said container (5).

5. Piezoelectric motor (1) according to claim 4, **characterised in that** said mechanical uncoupling means are composed of at least one layer of friction-preventing material (13) or at least one ball joint (17) composed of at least one oscillation ball (17a) connected to said second end (3b) of said piezoelectric actuator (3) and oscillating inside a respective seat (17b) of said base (5b) or at least one axial bearing (18).

6. Piezoelectric motor (1) according to claim 1, **characterised in that** said piezoelectric actuator (3) is internally equipped with at least one axial recess (19) adapted to allow an adjustment of the axial height of said push rod (9).

7. Piezoelectric motor (1) according to claim 6, **characterised in that** said push rod (9) is equipped with at least one axially-moving stem (21) sliding inside said axial recess (19) that is made integral with said piezoelectric actuator (3) and said push rod (9) through fastening means composed of at least one elastic tightening pliers (23) tightened by at least one tightening ring nut (25).

8. Piezoelectric motor (1) according to claim 3, **characterised in that** said second end (9b) of said push rod (9) is connected to at least one accessory functional element (27).

## Patentansprüche

1. Selbstgesteuerter piezoelektrischer Motor (1) mit radialer Lastkapazität, der aus mindestens einem piezoelektrischem Antrieb (3) besteht, welcher in mindestens einem Gehäuse (5) enthalten ist, der genannte piezoelektrische Antrieb (3) ist mit einem externen System verbunden, das durch das Dazwischenlegen von mindestens einem radialen Trägerelement (7) angetrieben wird, welches axial längs einer Bezugsachse (R-R) beweglich ist, die eine Antriebsrichtung des genannten piezoelektrischen Antriebs (3) definiert, das genannte radiale axial bewegliche Trägerelement (7) besteht aus mindestens einem Stößelschaft (9), der durch die Einwirkung des genannten piezoelektrischen Antriebs (3) axial beweglich zur genannten Bezugsachse (R-R) ist, der genannte Stößelschaft (9) ist radial mit axialen Steuervorrichtungen zur genannten Bezugsachse (R-R) ausgestattet, die mechanisch mit dem genannten Gehäuse (5) verbunden sind, und ist **dadurch gekennzeichnet, dass** das genannte radiale axial bewegliche Trägerelement (7) mit einem oder mehreren Sensoren ausgestattet ist, die dazu dienen, eine mikrometrische Axialverschiebung des genannten Stößelschaftes (9) zu messen.

2. Piezoelektrischer Motor (1) gemäß Patentanspruch 1, der **dadurch gekennzeichnet ist, dass** die axialen Steuervorrichtungen mindestens eine koaxiale Biegescheibe (11) zur genannten Bezugsachse (R-R) einschließen.

3. Piezoelektrischer Motor (1) gemäß Patentanspruch 1, der **dadurch gekennzeichnet ist, dass** der genannte Stößelschaft (9) ein erstes Endstück (9a) hat, das mit mindestens einem ersten Endstück (3a) des genannten piezoelektrischen Antriebs (3) verbunden ist, sowie ein zweites Endstück (9b), das mit dem genannten externen System verbunden ist, welches angetrieben werden soll.

4. Piezoelektrischer Motor (1) gemäß Patentanspruch 1, der **dadurch gekennzeichnet ist, dass** zwischen dem genannten zweiten Endstück (3a) des genannten piezoelektrischen Antriebs (3) und einer Basis (5b) des genannten Gehäuses (5) mechanische Entkopplungsvorrichtungen angebracht wurden.

5. Piezoelektrischer Motor (1) gemäß Patentanspruch 4, der **dadurch gekennzeichnet ist, dass** die genannten Entkopplungsvorrichtungen aus mindestens einer Schicht aus Antifriktionsmaterial (13) oder aus mindestens einem Kugelgelenk (17) bestehen, das aus mindestens einer Schwingkugel (17a) besteht, die mit dem genannten zweiten Endstück (3b) des genannten piezoelektrischen Antriebs (3) verbunden ist und in einer entsprechenden Aufnahme (17b) der genannten Basis (5b) schwingt, oder aus mindestens einem Axiallager (18).

6. Piezoelektrischer Motor (1) gemäß Patentanspruch 1, der **dadurch gekennzeichnet ist, dass** der genannte piezoelektrische Antrieb (3) intern mit mindestens einem Axialhohlraum (19) ausgestattet ist, der dazu dient, eine Axialhöhenverstellung des genannten Stößelschaftes (9) zu ermöglichen.

7. Piezoelektrischer Motor (1) gemäß Patentanspruch 6, der **dadurch gekennzeichnet ist, dass** der genannte Stößelschaft (9) mit mindestens einem axial beweglichen Schaft (21) ausgestattet ist, der im genannten Axialhohlraum (19) verschoben wird, welcher durch Befestigungsvorrichtungen, die aus mindestens einer elastischen Spannzange (23) bestehen, welche durch mindestens eine Spannmutter (25) gespannt wird, ein Stück mit dem genannten piezoelektrischen Antrieb (3) und dem genannten Stößelschaft (9) bildet.

8. Piezoelektrischer Motor (1) gemäß Patentanspruch 3, der **dadurch gekennzeichnet ist, dass** das genannte zweite Endstück (9b) des genannten Stößelschaftes (9) mit mindestens einem zusätzlichen Funktionselement (27) verbunden ist.

## Revendications

1. Moteur piézoélectrique autoguidé (1) avec capacité de chargement radial, composé d'au moins un actionneur piézoélectrique (3) contenu à l'intérieur d'au moins un conteneur (5), ledit actionneur piézoélectrique (3) étant interfacé avec un système externe à effectuer au moyen d'interposition d'au moins un élément de support radial (7) en mode axial mobile le long d'un axe de référence (R-R) définissant une direction de réalisation dudit actionneur piézoélectrique (3), ledit élément de support radial (7) en mode axial mobile étant composé d'au moins un embout (9) mobile en mode axial par rapport audit axe de référence (R-R) sous l'action dudit actionneur piézoélectrique (3), ledit embout (9) étant doté radialement de moyens de guidage axial par rapport audit axe de référence (R-R) connectés mécaniquement avec ledit conteneur (5), **caractérisé par le fait que** ledit élément de support radial (7) en mode axial mobile est doté d'un ou plusieurs capteurs aptes à mesurer un déplacement micrométrique axial dudit embout (9).

2. Moteur piézoélectrique (1) selon la revendication 1, **caractérisé par le fait que** lesdits moyens de guidage axial comprennent au moins un disque flexionnel (11) coaxial par rapport audit axe de référence (R-R).

3. Moteur piézoélectrique (1) selon la revendication 1, **caractérisé par le fait que** ledit embout (9) a une première extrémité (9a) en contact avec au moins une première extrémité (3a) dudit actionneur piézoélectrique (3) et une seconde extrémité (9b) de connexion avec ledit système externe à activer.

4. Moteur piézoélectrique (1) selon la revendication 1, **caractérisé par le fait qu'**entre ladite seconde extrémité (3a) dudit actionneur piézoélectrique (3) et une base (5b) dudit conteneur (5) sont interposés des moyens de découplage mécanique.

5. Moteur piézoélectrique (1) selon la revendication 4, **caractérisé par le fait que** lesdits moyens de découplage mécanique sont composés d'au moins une couche de matériel antifriction (13) ou au moins un joint à rotule (17) composé d'au moins une sphère d'oscillation (17a) connectée à ladite seconde extrémité (3b) dudit actionneur piézoélectrique (3) et oscillant à l'intérieur d'un logement respectif (17b) de ladite base (5b) ou au moins un coussinet axial (18).

6. Moteur piézoélectrique (1) selon la revendication 1, **caractérisé par le fait que** ledit actionneur piézoélectrique (3) est doté à l'intérieur d'au moins une cavité axiale (19) apte à consentir un réglage de la hauteur axiale dudit embout (9).

7. Moteur piézoélectrique (1) selon la revendication 6, **caractérisé par le fait que** ledit embout (9) est doté d'au moins une tige (21) mobile en mode axial coulissant à l'intérieur de ladite cavité axiale (19) qui est rendu solidaire audit actionneur piézoélectrique (3) et audit embout (9) par des moyens de fixation composés d'au moins une pince de serrage élastique (23) serrée par au moins une bague de serrage (25).

8. Moteur piézoélectrique (1) selon la revendication 3, **caractérisé par le fait que** ladite seconde extrémité (9b) dudit embout (9) est connectée à au moins un élément fonctionnel accessoire (27).
